# EUROPEAN PATENT APPLICATION

(11) **EP 1 118 460 A1**
(43) Date of publication of application: **25.07.2001**
(21) Application number: 00100950.5
(22) Date of filing: 18.01.2000
(51) Int. Cl.: B32B 31/20, B32B 31/24

(54) **System and method for adhering laminate to an alternate substrate material**

(71) Applicant: Premark RWP Holdings, Inc., Wilmington, Delaware 19801 (US)
(72) Inventor: Stolarski, Victoria L., Austin, Texas 78728 (US); Mafoti, Robson, Temple, Texas 76501 (US); McSpedon, John P., Temple, Texas 76502 (US); Perrine, Paul T., Killeen, Texas 76541 (US); Young, Bruce E., Killeen, Texas 76543 (US); Krejchi, Mark T., Temple, Texas 76502 (US)
(74) Representative: Patry, Didier Marcel Pierre

(57) **Abstract**

A system and method for substantially permanently bonding decorative laminates (101,103) to a polymeric or other alternative substrate material (102) are disclosed. A preferred embodiment of the present invention utilizes a corona treater to increase surface tension of surfaces of a substrate material (102) in order to provide for improved adhesive bonding. Thereafter, a film of adhesive is applied to the surfaces to be mated with laminates, the laminates (101,103) are mated with the substrate surfaces having the adhesive film, and pressure is applied during curing of the adhesive. Precise control of parameters such as the thickness of the adhesive, the amount of catalyst introduced, the amount of pressure applied during curing, the duration of the application of pressure, the amount of heat present during curing, and the like, allows operation of the present invention to provide a suitably permanent bond between dissimilar materials such as high pressure decorative laminate, ABS polymeric substrate, and high pressure laminate backer.

## Description

The present invention relates in general to the manufacturing of laminated products such as may be used for decorative flooring, counter and table tops, and wall panels, and more particularly to the manufacturing of such laminated products utilizing a polymeric or other alternative substrate material.

In the past laminate products, such as decorative and/or protective counter and table tops, flooring, and wall panels, have included adhesive lamination of an anterior layer, providing decorative or protective properties, to a substrate material such as fiberboard or particle board. Generally the anterior layer will include one or more kraft paper layers which are themselves adhesively laminated together using various types of resins, such as melamine formaldehyde and phenolic resins. For example, a high pressure decorative laminate may comprise a very thin overlay sheet impregnated with melamine resin and having aluminum oxide grit to provide for abrasion resistance, a decorative sheet disposed thereunder, and several sheets of kraft paper impregnated with phenolic resin disposed below the decorative sheet. When combined under high pressure, on the order of 1000 psi, and in the presence of heat, on the order of 300° F, the melamine resin and phenolic resin will cross link to provide a mechanical bond between these layers.

However, such anterior layers are inherently thin and somewhat flexible and, therefore, benefit from the application of a thicker and preferably more rigid substrate, such as the aforementioned fiberboard or particle board substrates, to add strength and/or thickness to the resulting product. For example, when used as flooring material to simulate hardwood flooring, the above described high pressure laminate does not present a profile consistent with the hardwood flooring it may replace and, therefore, may be unacceptable. Moreover, such a thin profile militates against the use of techniques utilized in the installation of flooring which provide a consistent surface from component planking, such as tongue and groove edge treatment utilized to provide interlocking planks. Additionally, such relatively thin materials may not exhibit other characteristics of a desired material, such as the resonance of hardwood flooring it is replacing. Accordingly, the aforementioned substrates such as fiberboard or particle board have been utilized to provide desired characteristics to laminated products.

However, substrates such as fibreboard and particle board are relatively heavy materials causing a resulting laminate product including such a substrate to present an excessive total product weight. Additionally, these fibrous prior art substrates are subject to dissolution, warpage, and other undesired characteristics when exposed to moisture. These characteristics are particularly undesirable for substrates utilized in decorative or protective laminates as these laminate products are typically installed expressly for the purpose of providing a decorative and protective surface in a wet environment, or other environment hostile to such materials.

Accordingly, there is a need in the art for a laminate product which utilizes an alternative substrate material (ASM), i.e., synthetic or non-cellulose substrate material, providing desired attributes, such as a desired rigidity, density, weight, and load deflection value when presented in thicknesses suitable for use in a laminate product, while providing superior resistance to the environmental conditions such as moisture. As described in the above referenced patent application entitled "Polymeric Foam Substrate and its Use as in Combination With Decorative Surfaces" polymeric materials, such as foamed acrylonitrile-butadiene-styrene (ABS), extruded in sheets of a desired thickness provide properties of a desired substrate.

However, the use of such ASMs present problems in producing a desired laminate product. For example, sheets of polymeric materials suitable for use as a laminate material substrate, i.e., a high pressure decorative laminate (HPDL) substrate, are not generally gas permeable, thus presenting problems in adhering an anterior surface thereon having both the necessary mechanical integrity, i.e., sufficiently permanently mated anterior surface and substrate, as well as the desired appearance, i.e., substantially smooth surface having no bubbles or blisters associated with trapped gas pockets.

Moreover, materials suitable for use as ASMs often do not initially present a surface which is acceptable for providing for an anterior surface to be substantially permanently adhesively attached thereto under the conditions in which such laminate products might be utilized. Such adhesion problems are compounded in the circumstances in which such decorative and/or protective laminated products are generally deployed, including environments where large temperature and/or humidity variations are experienced or where heavy objects, such as furniture, are supported by and/or moved across the laminated product.

Problems with adhesion of an anterior surface to ASMs are further compounded because material such as the above mentioned polymeric materials deform or loose solidity when exposed to temperatures at which many useful adhesives might be cured. For example, the aforementioned ABS material begins to appreciably warp at temperatures in excess of 70° C.

Accordingly, there is a need in the art for a system and method for substantially permanently laminating a desired anterior surface, such as the aforementioned decorative and/or protective layer, onto an ASM, such as the aforementioned foamed ABS material, to result in a laminate product having desired characteristics including a minimum level of mechanical integrity and meeting a minimum appearance standard consistent with its use as a decorative and/or protective surface treatment.

These and other objects, features and technical advantages are achieved by a system and method wherein a selected ASM, such as the aforementioned foamed ABS material or other synthetic material, is initially treated in order to provide a greater surface tension, and thereafter provided with a controlled amount of adhesive which, in combination with application of pressure according to a predetermined regime, is utilized to attach an anterior or first superstructure, i.e., a high pressure decorative laminate, and/or a posterior or second superstructure, i.e., a high pressure laminate backer, surface thereto. Accordingly, a laminate product is provided having an anterior surface, such as the above mentioned decorative and/or protective layer, substantially permanently attached to a substrate or core comprised of an alternative substrate material providing advantages over the prior art substrate materials, such as the aforementioned advantages of resistance to environmental conditions, advantages in weight, and the like.

A preferred embodiment of the present invention utilizes a corona treater in treating the surface of the alternative substrate material. Accordingly, an electrical charge imparted by the corona treater deposits a corona onto a surface of the ASM to which laminates are to be applied, i.e., a surface which is to accept the above mentioned anterior surface and/or a surface which is to accept the above mentioned posterior surface, in order to provide an increased surface tension of a surface to accept laminations. It shall be appreciated that the increased surface tension significantly increases the ability of the adhesives utilized according to the present invention to bond to the ASM surface and, thus, to substantially permanently prevent the resulting laminate product from delaminating.

According to a preferred embodiment of the present invention, a urethane adhesive is deposited on the corona treated surface in a uniform coating of a controlled thickness. Preferably, the urethane adhesive utilized is a two part urethane adhesive in order to provide a bond of sufficient strength and presenting desired aesthetic qualities in the finished product. However, an alternative embodiment of the present invention utilizes a one part urethane adhesive, such as where increased pot life is desired and where increased curing time, i.e., setup time, is desired or is not intolerable. Another alternative embodiment of the present invention utilizes water based adhesive, such as where prolonged or continuous exposure to moisture is not expected with respect to the edges of the laminate product, where such adhesive is exposed, and, therefore, may be susceptible to dissolution due to water infiltration and in cases where a long cure time (i.e., cure times greater than 48 hours) is allowed before the laminated material is subsequently stressed, such as by cutting, routing, fabricating, or rough movement..

Preferably, a laminate product setup regime according to the present invention includes the use of mechanical manipulation in order to ensure the interfacing of the applied adhesive with all points of the surface of the ASM and the surface of the anterior and/or posterior surface accepted thereon. Likewise, the preferred setup regime includes exposure to a controlled pressure, such as by a cold press or, alternatively, a hot press or heated pressure rollers. However, it should be appreciated that the use of a hot press with ASMs, such as the aforementioned preferred embodiment polymeric materials, must be carefully controlled in order to utilize a heat which is not inconsistent with the ASM's solid state.

Accordingly, the present invention provides technical advantages in that an ASM is treated, coated with adhesive, and provided with desired laminate surfaces so as to result in a laminate product having desired mechanical integrity and appearance while providing superior characteristics with respect to weight and durability associated with the use of an alternative substrate material. Moreover, it shall be appreciated that treating, coating, and lamination according to the present invention are suitable for use in automated manufacturing lines allowing for the manufacture of an amount of ASM laminate product suitable for supplying demands associated with the product's use as counter/table top surfacing, floor surfacing, wall panels, and the like.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

For a more complete understanding of the present invention, and the advantages thereof, reference is now made to the following descriptions taken in conjunction with the accompanying drawings, in which:
FIGURE 1 shows a cross section view of an alternative substrate material laminated product resulting from operation of the present invention; and
FIGURE 2 shows a lamination apparatus according to the present invention.

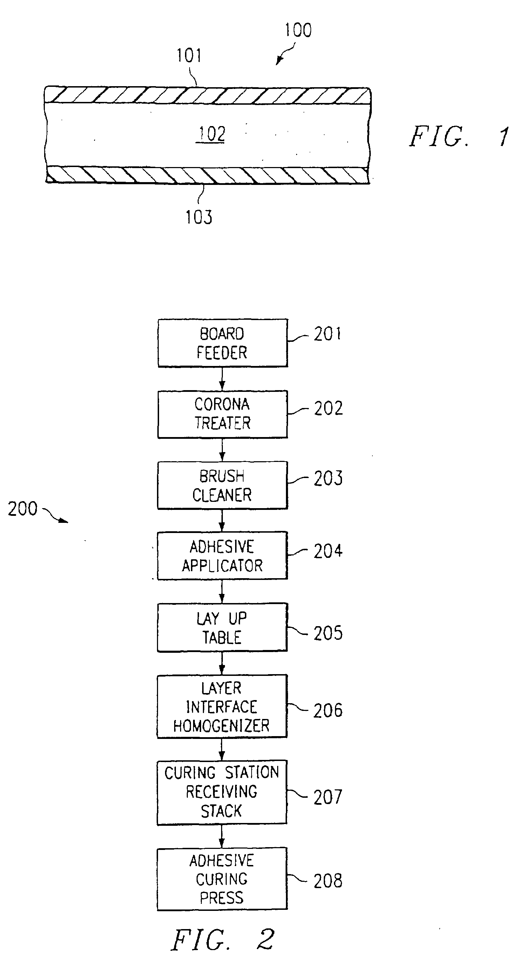

Directing attention to FIGURE 1, an alternative substrate material (ASM) laminated product provided according to the present invention is shown in a cross-sectional view generally as laminated product 100. Laminated product 100 includes anterior or first superstructure surface material 101, substrate or core material 102, and posterior or second superstructure surface material 103.

However, it should be appreciated that there is no limitation that both an anterior surface material and a posterior surface material be interfaced to a selected ASM according to the present invention. For example, an alternative embodiment of a laminated product provided according to the present invention may include only an anterior surface material or only a posterior surface material interfaced with a selected ASM. However, a preferred embodiment of the present invention includes the use of posterior surface material 103 to balance the application of anterior surface material 101. In example, it is likely that the thermal expansion and/or contraction of anterior surface material 101 and substrate material 102 may be different. Accordingly, the application of posterior surface material 103 provides means by which warpage of the laminated product associated with environmental changes may be avoided through balancing the expansive/contractive forces of the anterior surface material.

Moreover, it shall be appreciated that, although reference herein is made to anterior and posterior surfaces, the present invention is not limited to the application of a lamination material layer to any particular surface of a substrate material. For example, in addition to or in the alternative to the aforementioned anterior and posterior surfaces, material may be substantially permanently attached to any or all sides of a selected substrate material, if desired.

Anterior surface material 101 preferably provides a decorative and/or protective layer having properties of the desired lamination product. For example, anterior surface material 101 may provide an exposed surface once interfaced with ASM 102 which provides a decorative print suitable for use as a wall panel, as a tub or shower enclosure, as a kitchen counter top, or as a flooring plank. Additionally or alternatively, this exposed surface of anterior surface material 101 may provide a protective surface suitable for use in wet environments or which is heat resistant and/or abrasion resistant.

Although not shown in FIGURE 1, anterior surface material 101 may itself be a laminated product. For example anterior surface material 101 may be prepared using a decorative paper layer having a desired pattern printed thereon which is impregnated with melamine-formaldehyde resin and laminated to one or more sheets of kraft paper impregnated with phenol formaldehyde resin. The surface of the decorative layer that will be exposed in the final product may be prepared by bonding an overlay layer, such as a thin paper sheet impregnated with the same type of melamine formaldehyde resin. Where laminate product 100 is to be utilized in a high wear environment, such as its use in flooring, a filler may be included in the overlay in order to provide abrasion resistance and/or a non-slip surface. Such fillers may include alumina, calcium carbonate, milled glass fibers, ground glass fibers, or the like.

Posterior surface material 103 may be utilized to provide an installation surface of the laminated product including the ASM which is more suitable for interfacing with a surface to be covered by the laminated product or to present a surface more consistent with the tools, adhesives, and techniques of a base of laminated product installers. Additionally, or alternatively, posterior surface material 103 may provide a protective layer having properties of the desired lamination product as described above with respect to anterior surface 101.

As with anterior surface 101, posterior surface material 103 may be a laminated product. For example posterior surface material 103 may be prepared using layers of printed paper, overlay paper or kraft paper impregnated with melamine resin and layers of kraft paper impregnated with phenolic resin which are laminated to one another. Accordingly, posterior surface material 103 may be utilized as a HPDL backer well known in the art for providing an exposed surface adapted for installation on structure such as sub-flooring, untreated wood products of a counter top or cabinet, and the like.

It shall be appreciated that, in addition to the above mentioned laminated compositions utilized as anterior and/or posterior surface materials, which may include such laminated compositions as high pressure decorative laminate, low pressure decorative laminate, and high pressure backer, anterior and/or posterior surface material utilized according to the present invention may include non-laminated compositions, including solid surface material, i.e., solid surface counter top material, and metal. Accordingly, although reference herein may be made to laminated surface materials, it is not intended to limit such surface materials to materials which are themselves laminated, but rather to materials which may be laminated upon the substrate material.

Preferably substrate material 102 is an alternative substrate material as shown and described in the above referenced patent application entitled "Polymeric Foam Substrate and its Use as in Combination With Decorative Surfaces," the disclosure of which has been previously incorporated herein by reference. For example, a preferred embodiment of the present invention utilizes a co-mingled ABS foamed extruded sheet, such as might be predominately comprised of ABS but may also contain ABS/polycarbonate, high impact polystyrene, and possibly, in low levels, polyvinyl, chloride, nylon, polyphenylene oxide, or like engineering plastics, as well as fillers such as calcium carbonate, formed as shown in the above referenced patent application as a substrate material. However, it shall be appreciated that the present invention may be utilized to provide a laminate product including any number of alternative substrate materials. For example, alternative embodiment of the present invention may utilize such alternative substrate materials as ASB, ABS/PC, nylon, PVC, or like materials alone or in combination, if desired.

Although not readily apparent from the illustration of FIGURE 1, the interface of anterior surface material 101 and substrate material 102 preferably includes a layer of adhesive material (not shown) to provide mechanical integrity of the anterior surface material and substrate material in the resulting laminated product. Likewise, the interface of posterior surface material 103 and substrate material 102 preferably includes a layer of adhesive material (not shown) to provide mechanical integrity of the posterior surface material and substrate material in the resulting laminated product. By providing a sufficiently strong bond which is substantially free of irregularities, including gas bubbles and impurities, the adhesive material layers of the preferred embodiment of the present invention provide a resulting laminated product which provides resistance to delaminating approaching that of a monolithic structure.

Attention is directed to FIGURE 2 wherein preferred embodiment lamination apparatus 200 adapted to produce laminate products including an ASM according to the present invention is shown. According to this preferred embodiment, board feeder 201 is utilized to hold a supply of ASM boards to be utilized in providing laminated product according to the present invention. For example, a stack or stacks of 4 foot by 8 foot sheets of substrate material may be held by, or in communication with, board feeder 201 in order that a desired number of ASM boards may be fed for surface treatment and lamination according to the present invention. In the preferred embodiment, ASM boards are serially fed by board feeder 201 to provide a substantially continuous stream of substrate material for forming into a desired laminated product.

Although described herein as boards, it shall be appreciated that configurations of substrate material other than those typically thought of as boards may be provided with laminated coverings according to the present invention. For example, substrate material provided in shapes commonly utilized in building structures, such as tiles, blocks, columns, mouldings, and the like, may be utilized if desired. Moreover, the present invention is not limited to the use of any particular size of component or resulting product. For example, rather than the above mentioned 4 foot by 8 foot sheets, boards having dimensions more consistent with flooring planks may be laminated according to the present invention. Of course, it shall be appreciated that economics may be realized by utilizing larger dimensional components and cutting the resulting product to desired sizes.

Preferably board feeder 201 feeds the ASM boards to components adapted to prepare the surface of the ASM boards for lamination. In the preferred embodiment illustrated in FIGURE 2, such components include corona treater 202 adapted to prepare surfaces of the ASM boards to receive lamination. Corona treater 202 is adapted to receive ASM boards, such as may be provided from board feeder 201 by automated conveyer mechanism, and is utilized to condition the surfaces of ASM boards in order to improve the adhesion or bonding of laminates by lamination apparatus 200. In the preferred embodiment corona treater 202 imparts an electrical charge that deposits a corona, i.e., a discharge from a corona conductor when the potential difference between the conductor and the ASM board in near proximity exceeds a certain value but is not enough to cause a spark or an arc, onto the surface resulting in the oxidation of the ASM board surface and increases the surface tension thereof.

Experimentation has revealed that treating surfaces of ASM boards, such as the aforementioned preferred embodiment co-mingled ABS, increases surface tension from approximately 34 dynes to 60+ dynes. Such experimentation has also revealed that the increased surface tension significantly increases the ability of adhesives to bond to the ASM surface and, thus, to provide a laminated product more resistive to delaminating. Directing attention to the table below, it can be seen that experimental results using both a one component urethane adhesive and a two component urethane adhesive provide substantial improvement in the resulting laminated product mechanical integrity from the aforementioned corona treating of the ASM boards. It shall be appreciated that the plug strength provided in the table below is resultant from a 90° Instron tensile pull of the substrate material from the laminated surface material.

| | **Adhesive Thickness/Water Catalyst** | | |
|---|---|---|---|
| **Adhesive Type** | **Adhesive** | **Water** | **Sample Plug Strength** |
| **One Component Urethane** | | | |
| ASM Corona Treated | | | |
| Smooth side | 3 mils/sqft. | 0.55g | 103.0 psi. |
| Rough side | 3 mils/sqft. | 0.55g | 86.25 psi |
| | | | |
| ASM Untreated | | | |
| Smooth side | 3 mils/sqft. | 0.55g | 60.40 psi |
| Rough side | 3 mils/sqft. | 0.55g | 41.80 psi |
| | | | |
| **Two Component Urethane** | | | |
| ASM Corona Treated | | | |
| Smooth side | 3 mils/sqft. | | 94.00 psi |
| Rough side | 3 mils/sqft. | | 88.00 psi |
| | | | |
| ASM Untreated | | | |
| Smooth side | 3 mils/sqft. | | 50.80 psi |
| Rough side | 3 mils/sqft. | | 26.80 psi |

From the table above it is also evident that the relative smoothness of the substrate material's surface to be laminated affects the mechanical integrity of the resulting laminated product. Optical microscopy reveals that such rough surfaces are often the product of the substrate material having a somewhat fibrous surface which appears under magnification as tangled spaghetti or tangled tree branches providing holes and tunnels that lead to the interior spaces of the substrate material. These voids may allow adhesive, such as under the pressure of expanding gasses associated with the curing of adhesives, to migrate inward from the surface and, therefore, provide less adhesive in the interface between the substrate and laminate for mechanical bonding. Additionally, the rough surface characteristics allow the adhesive to bond to many areas that will break off of the main body of the substrate with very little pressure. Moreover, the increased roughness associated with the fibrous material disposed in such a manner may also give a false indication as to the thickness of an adhesive coating applied thereon. Accordingly, it shall be appreciated that adjusting the amount of adhesive utilized as between relatively smooth and relatively rough substrate material surfaces may be utilized to further improve the resulting mechanical integrity.

According to a preferred embodiment, upon the surfaces of the ASM board to receive the laminate being placed in a condition suitable for substantially permanently bonding with laminate surfaces, i.e., the anterior and posterior surface materials, ASM boards are provided, such as through continued conveyance by the above mentioned automatic conveying mechanism, to brush cleaner 203. Brush cleaner 203 is adapted to accept ones of the ASM boards, such as through the use of an automatic conveying mechanism, and to remove unwanted particulate matter from surfaces of the ASM boards through brush interaction therewith.

It shall be appreciated that brush cleaner 203 and corona treater 202 may be reversed in order in lamination apparatus 200 if desired. However, the preferred embodiment disposes the brush cleaner subsequent to the corona treater in order to ensure cleaning of particulate matter attracted to the ASM boards resulting from a static electricity buildup associated with the corona treatment.

In a preferred embodiment brushes are provided to remove particulate matter, such as particles of the ASM material itself, and other contamination from all surfaces of the ASM boards passed there through. Alternatively, only selected surfaces of the ASM boards, such as the surface or surfaces of the ASM boards to receive lamination, are cleaned by brush cleaner 203. Accordingly, more complex handling of the ASM boards may be avoided, such as disposing brushes to clean an undersurface of the ASM boards or rotation of ASM boards to present surfaces to be cleaned in a proper orientation for cleaning.

It shall be appreciated that, although brush cleaner 203 is described herein as providing brushes to interact with ASM boards fed there through, brush cleaner 203 may utilize brushes other than ones which dispose bristles in contact with a surface of the ASM board to be cleaned. For example, nozzles may be disposed within brush cleaner 203 which direct a high pressure flow of gas, such as compressed air, and/or liquid, such as water or a cleaning solvent, at a surface of the ASM board to be cleaned, thus defining a pressure cleaning brush, such as an air brush. For example, a liquid cleaning brush, comprising a set of the aforementioned nozzles, may be followed by a gas cleaning brush, comprising a second set of the aforementioned nozzles, in order to clean residual liquid from the ASM board. Moreover, it should be understood that the traditional bristle bearing brushes and the pressure cleaning brushes may be used in combination or in the alternative as deemed advantageous.

As the material of the ASM boards is preferably comprised of plastics, such as the aforementioned ABS foamed sheet, the build up of static electricity upon the surface of the ASM boards and, accordingly, problems attendant therewith may be experienced. For example, the rubbing of ASM boards together, such as when being removed from a stack in board feeder 201, the ASM boards rubbing other surfaces, such as an automatic conveyance system, and the surface of the ASM boards being brushed by bristles of brushes, may result in static electricity causing undesired effects such as particulate matter clinging to the surfaces or the ASM boards clinging to one another or other componentry. Accordingly, lamination apparatus 200 preferably includes adaptation to minimize the introduction of static electricity charge to the ASM boards and/or to discharge any accumulated static electricity charge thereon. For example, brush cleaner 203 may be adapted to include static discharge strips which are disposed to cause the discharge of ASM board surfaces. Additionally or alternatively the brushes of brush cleaner 203 may be adapted to reduce the amount of static electricity buildup associated with their use, such as by themselves providing a static discharge path or by providing ionized gas or liquid suitable for neutralizing any resulting static electricity charge.

Upon the surfaces of an ASM board to receive lamination being of a desired cleanliness, i.e., cleaned suitably by brush cleaner 203 or having been provided originally in a suitable state thus obviating the need for brush cleaner 203, the ASM boards of the preferred embodiment of lamination apparatus 200 are provided to adhesive applicator 204, such as through further conveyance by the above mentioned automatic conveying mechanism. Adhesive application 204 prepares the surface of the ASM boards to adhesively engage laminates. In the preferred embodiment, adhesive applicator 204 provides a controlled coating of adhesive to the surfaces of the ASM board which are to receive lamination. However, in an alternative embodiment, adhesive applicator 204 prepares the surface of the ASM boards themselves, such as by applying a catalyst or other agent suitable for causing the material of the surface of the ASM board to adhesively engage a particular laminate, rather than applying a discrete adhesive material thereto.

In the preferred embodiment where adhesive applicator 204 provides a coating of adhesive to the surfaces of the ASM boards, the adhesive applied may be any of a number of adhesives suitable for use in providing the desired bond between the ASM and the laminate material. For example, one component urethane adhesives, two component urethane adhesives, water based adhesives, including polyvinyl acetate (PVA), vinyl acetate ethylene (VAE) and/or polyvinyl alcohol (PVOH), water based adhesives modified with aqueous based urethane dispersions for cross linking, or the like may be used if desired.

It shall be appreciated that the use of particular adhesives may be desirable over other such adhesives in certain applications although each adhesive provides a satisfactory bond. For example, one component adhesives, such as the aforementioned one component urethanes, typically provide a greater pot life than multiple component adhesives, such as the aforementioned two component urethanes, and thus are often more amenable to continuous application processes such as those utilizing an adhesive application roller. However, such one component adhesives often require an external catalyst, such as water, to expedite the cure to rates more amicable to production speed. The addition of the external catalyst is difficult to apply quantitatively and consistently because of the minute amount required to initiate reaction. In addition to the application of an external catalyst such as water, curing of such one component adhesives may often be catalyzed with an application of heat. However, as the preferred embodiment ASM is a polymeric plastic, heat sufficient to cure such a one component adhesive in a desired amount of time may not be attainable without adversely affecting the shape or solidity of the substrate material.

Moreover, the chemical reaction of the one component adhesives expels carbon dioxide gas that can become trapped at the bond line due to the non-porous nature of both the laminate and the ASM material. The entrapped gas then produces gas pockets of various sizes, which bulge the product's surface yielding a panel with poor cosmetic appearance, as well as decreasing the mechanical integrity of the laminated product. Such gaseous discharge may be controlled through the utilization of a hot press during curing and/or its affects may be mitigated through techniques allowing for the escape of gasses, such as pin pricking the laminate and/or substrate material or the providing channels either in the application of the adhesive or the surfaces of the materials to be bonded, as well as the use of gas scavengers such as calcium oxide, barium hydroxide, or the like.

The preferred embodiment of the present invention utilizes a two component urethane adhesive, such as MOR-AD 695-28 available from Morton International, Inc., Chicago, IL. Accordingly, the components of the urethane adhesive are mixed in order to create the desired bond. In the preferred embodiment, adhesive applicator 204 includes a Meter Mix system, such as is available from Graco, Inc., Minneapolis, MN to introduce components of the urethane adhesive to each other in controlled amounts in order to assure the proper curing of the resulting adhesive material. The Meter Mix system feeds each component of the adhesive separately into a static mixer which is preferably located just prior to an adhesive spreader trough which is in communication with adhesive rollers. By properly selecting the amount of catalyst, such as amine or tin catalyst, which is provided in the "A" component of the adhesive when it is made, a sufficient pot life may be experienced by the resulting adhesive to allow for its application by the above mentioned adhesive rollers. Accordingly, a preferred embodiment of adhesive applicator 204 includes adhesive rollers disposed such that a coating of two component urethane adhesive having a controlled thickness is deposited on a desired surface of an ASM board passed there through.

Of course, alternative techniques for mixing and/or delivering multiple component adhesives may be utilized according to the present invention, if desired. For example, spray nozzles may be utilized such that a multi component adhesive is mixed, such as by the aforementioned Meter Mix system, or where the components are intermixed just prior to delivery to a single nozzle for spray delivery by nozzles onto the surface of an ASM board to result in a coating of a controlled thickness. Alternatively, multiple sets of spray nozzles, wherein each set of nozzles is associated with a different component of the adbesive may be utilized without the benefit of the meter mix system to result in a coating of a suitable mixture of the adhesive components relying on the spray mixing of the components. However, it shall be appreciated that the use of a spray of material to provide an adhesive coating may not be desirable such as where hazardous or noxious chemicals are present in the adhesive. Moreover, over-spray and similar undesired delivery results are often attendant with spray delivery and therefore may not provide a desired solution in a particular application.

Another alternative embodiment of the present invention utilizes a bead delivery technique to deposit an adhesive coating of a controlled thickness on the surface of an ASM board. For example, a linear extrusion head providing a delivery orifice substantially the width of an ASM board may be utilized to deposit adhesive by forming an adhesive bead between the extrusion head and the surface of the ASM board which, as the board is moved in relation to the extrusion head, causes an adhesive coating of uniform thickness to be deposited. Accordingly, the above described meter mixing system may be utilized to combine the components of a multiple component adhesive immediately prior to their introduction into the extrusion head which is just prior to the application of the adhesive material onto the substrate. Moreover, the manifold of the extrusion head in which the adhesive material is accumulated prior to extrusion by the extrusion head is substantially protected from exposure to external or ambient atmosphere and, thus, may be utilized to provide a satisfactory pot life for dispensing the adhesive according to the present invention.

Although described above with respect to multi-component adhesives, it shall be appreciated that alternative adhesive delivery techniques to the adhesive roller described with respect to the multiple component urethane adhesive may be utilized with single component adhesives. Their use has been described herein with reference to multi-component adhesives as the delivery of such adhesives may benefit from techniques which either do not introduce the multiple components to one another until actual delivery or at a point in the delivery process as near the actual delivery onto the surface to be coated as possible in order to avoid unwanted curing of adhesive material on or in the delivery system of adhesive applicator 204.

It shall be appreciated that the preferred embodiment of adhesive applicator 204 is adapted to provide a coating of adhesive material to all sides of an ASM board to be laminated. For example, in order to result in the laminated product shown in FIGURE 1 having both a posterior surface material and an anterior surface material adhered to the substrate material, a preferred embodiment of adhesive applicator 204 includes adhesive rollers disposed both above and below an ASM board fed there through to provide the desired coating of adhesive on both the anterior and posterior sides of the ASM board. An alternative embodiment of adhesive applicator 204 may utilize adhesive applicator apparatus, such as the aforementioned adhesive roller, only on a single side of an ASM board and provide coating of multiple surfaces of the ASM board by handling of the ASM board itself, such as by flipping or rotating the ASM board.

In another alternative embodiment of the present invention, lamination apparatus 200 is adapted to provide application of a number of lamination surfaces less than that ultimately desired, such as providing lamination of only a single side of the substrate material. Accordingly, a substrate material may be passed through lamination apparatus 200 a number of times in different orientations in order to result in the desired number of sides or surfaces receiving a laminated surface. Such an embodiment may be desirable, for example, where only a single surface is typically laminated and, thus, multiple laminations may be accommodated upon those instances where occasionally desired. Moreover, as surfaces of the substrate material are left uncoated by the adhesive applicator of such an alternative embodiment, subsequent handling of the substrate material may be simplified, i.e., a simple conveyer belt apparatus may be utilized in transporting a substrate material having an anterior surface coated with adhesive to a station for receiving the anterior surface material. However, it shall be appreciated that such an embodiment is generally not desired in providing lamination of multiple surfaces due to the increased manufacturing time associated with the production of the complete laminated product and an increased risk that warpage will be experienced during the time between application of the first lamination surface and a second lamination surface. Accordingly, the preferred embodiment operates to apply at least opposing lamination surface sides substantially contemporaneously and, therefore, provides for applying adhesive to at least the opposing sides of the substrate where such sides are to receive lamination.

As mentioned above, preferably adhesive applicator 204 provides a coating or film of adhesive in a controlled, substantially uniform, thickness. It should be appreciated that adhesives such as those suitable for use in providing a laminated product able to withstand the rigors of flooring, counter top, or wall panel use are generally costly. Accordingly, it is desired to apply such adhesives sparingly. However, tempering the sparing application of such adhesives is the competing concern that a sufficient amount of adhesive to provide a substantially permanent bond be applied. In addressing these, as well as other, competing concerns, experimentation has revealed that application of adhesives in the range of approximately 3 to approximately 10 mils in thickness are generally suitable for applications as described above. Preferably the thickness of an applied film of urethane adhesive is in the range of from 3 mils to 5 mils with the most preferable adhesive film having a thickness of approximately 4 mils. Similarly, preferably the thickness of an applied film of water based adhesive is in the range of from 4 mils to 8 mils with the most preferable adhesive film having a thickness of approximately 6 mils. Of course, there are a number of characteristics which may affect the selection of a particular adhesive film thickness, such as the relatively rough nature of a surface of the substrate to be laminated, as discussed above. Accordingly, one of skill in the art will appreciate that selection of an adhesive film thickness, even outside the above described preferred range of thicknesses, may be desirable under particular conditions.

In addition to the above described techniques for depositing a film of adhesive material upon a surface of an ASM board, adhesive applicator 204 may be adapted to further catalyze the curing of an adhesive. For example, where urethane adhesives are utilized, such as the aforementioned one component urethane adhesives, adhesive applicator 204 may include nozzles to introduce a water mist to the adhesive film in order to catalyze the reaction. In a preferred embodiment this water mist is delivered at a controlled rate selected from the range of approximately .2g/sqft. to .7g/sqft. to a one component urethane adhesive such as Mor-Ad 858-155, available from Morton International. It should be appreciated that decreasing the introduction of this catalyst significantly decreases the bond strength, while increasing the introduction of this catalyst may catalyze the reaction too much which in turn produces the aforementioned gas which may be trapped as bubbles or blisters. Accordingly, a balance must be had as between bond strength and curing action of the adhesive in order to result in a laminated product having desired characteristics. Experimentation has revealed that a most preferable range of water mist delivered to the preferred embodiment urethane adhesive is approximately .5g/sqft to .55g/sqft and most preferably is .5g/sqft when the above mentioned most preferred urethane adhesive film thickness of 4 mils is used.

Upon coating of surfaces of the ASM board with an adhesive material by adhesive applicator 204, the ASM boards of the preferred embodiment of lamination apparatus 200 are provided to lay-up table 205 to receive lamination surface materials thereon. It shall be appreciated that conveyance of an ASM board from adhesive applicator 204 to lay-up table 205 may be by the above mentioned automatic conveying mechanism. However, as a preferred embodiment of the present invention provides adhesive coating of both an anterior and posterior surface of ASM boards, particular conveyance mechanisms such as a conveyer belt mechanism commonly used in manufacturing facilities may not be preferred in the providing of a coated ASM board from adhesive applicator 204 to lay-up table 205. Accordingly, a conveyance mechanism adapted to provide the necessary manipulation of an ASM board between adhesive applicator 204 and lay-up table 205 without substantially disturbing an adhesive film coating thereon may be utilized. In a preferred embodiment of the present invention, a conveyer mechanism adapted to engage substantially only uncoated edges of ASM boards is utilized between adhesive applicator 204 and lay-up table 205. Alternatively, human interaction may be utilized in removing coated ASM boards from adhesive applicator 204 and depositing the ASM boards in lay-up table 205.

Where both a posterior surface material and an anterior surface material are to be adhered to the substrate material, lay-up table 205 preferably positions a selected lamination surface material, preferably the posterior surface material, for interfacing of a coated surface of the substrate material therewith. For example, the coated ASM board is moved into juxtaposition with a sheet of posterior substrate material having substantially the same dimensions as the ASM board by the aforementioned conveyance mechanism. Thereafter the substrate material and posterior surface material are interfaced, i.e., the substrate material and posterior material are placed in contact with the other material such that the edges of each substantially align. Likewise, anterior surface material having substantially the same dimensions as the ASM board is placed in juxtaposition therewith and, thereafter, the substrate material and anterior surface material are interfaced as described above. Of course, although described in the preferred embodiment as having the same dimensions, there is no limitation of the present invention to laminating surfaces having dimensions consistent with that of the substrate. For example, multiple pieces of anterior surface material may be combined to cover an anterior surface of the substrate. Likewise, the laminate surface material or substrate may have a substantially smaller dimension than the mated component and, therefore the material extending beyond the mated component may be trimmed, if desired.

It shall be appreciated that placing of both the anterior surface material and posterior surface material in juxtaposition with the substrate material for interfacing as described above may be accomplished in a single step. For example, lay-up table 205 may retain both the anterior and posterior surface materials in juxtaposition wherein a gap is retained there between sufficient for the introduction of a coated ASM board. Upon the introduction of the coated ASM board, lay-up table 205 may provide relative motion, such as the lifting of a table surface, to result in the posterior surface material interfacing with a posterior surface of the substrate material and the anterior surface material interfacing with an anterior surface of the substrate material.

Although described above with reference to interfacing an anterior and posterior surface material, it shall be appreciated that the lay-up table of the present invention may be adapted to suitably interface any number of lamination surface materials to a substrate material. For example, in the alternative embodiment wherein only a single surface of the substrate material is to receive a lamination surface material, lay-up table 205 of the present invention may retain this single surface material in position such that when a coated substrate material is moved into a corresponding position, the surface material is interfaced as described above. Likewise, surfaces in addition to or in the alternative to the above described posterior and anterior surfaces may be provided with a laminate surface by lay-up table 205 by retaining such surface materials in a proper orientation and interfacing them with a corresponding surface of the substrate material.

Upon having lamination surface materials interfaced with a substrate, the preferred embodiment of the present invention provides the resulting combination of materials to layer interface homogenizer 206, such as through conveyance by the above mentioned automatic conveying mechanism. Layer interface homogenizer 206 is utilized to ensure that substantially all of a mating surface of the laminate surface material and a corresponding mating surface of the substrate material engages the adhesive and, therefore, engages the other material. Such an affirmative engaging of the mating surfaces ensures that there are no air or gas bubbles present in the interface which may degrade the mechanical integrity of the resulting laminated product.

In a preferred embodiment, layer interface homogenizer 206 utilizes nip rollers disposed to accept the ASM board and interfaced lamination surfaces and to exert a controlled pressure, preferably 40 psi, on each such laminated surface such that trapped gasses are expelled and full engaging of mating surfaces is achieved. Accordingly, the aforementioned automatic conveying mechanism may pass the ASM board and interfaced lamination surfaces beneath or between nip rollers disposed to rotatably engage the exposed surfaces of the lamination surfaces.

Additionally or alternatively, layer interface homogenizer 206 may include heated pinch rollers, such as might be utilized in order to accelerate curing of an adhesive, disposed to rotatably engage surfaces. Accordingly, in addition to providing homogeneity to the interface, layer interface homogenizer 206 may encourage curing of the bond between the surfaces. Moreover, through the application of a proper amount of pressure and a proper amount of heat, the heated pinch rollers of this embodiment may be utilized to provide a suitable bond without the further application of pressure as described herein below with respect to an adhesive curing press. Of course, it should be remembered that, as described above, the application of such heat should be carefully controlled in order to avoid undesired effects upon the particular alternative substrate material selected. Accordingly, a preferred embodiment of the aforementioned heated pinch rollers utilizes a heat at said pinch rollers sufficient to provide a desired heat to the adhesive without causing the temperature of the substrate material to exceed 70° C. For example, an operating temperature of the pinch rollers may be selected which, when thermodynamically conducted through a surface such as the laminate surface at a speed at which the pinch rollers engage the material provides a heat to the substrate material within acceptable boundaries. Additionally or alternatively, heating of pinch rollers may be actively controlled, such as by a processor-based system operating under control of an instruction set, by monitoring a temperature of substrate material and adjusting the temperature of the pinch rollers to avoid excessive heating of the substrate material.

In order to fully and properly cure the bond between the substrate material and laminate surface material, the preferred embodiment of the present invention maintains substantial and substantially continuous pressure upon the substrate material and interfaced laminate surface material until such a bond has developed. However, as it is anticipated that large amounts of the resulting laminated product will be desired and the application of the above mentioned pressure during curing of the bond will be relatively lengthy, lamination apparatus 200 of the preferred embodiment includes a staging area in which a suitable amount of substrate material and interfaced lamination surface material may be collected for introduction into a press to provide the desired pressure over an acceptable length of time.

Directing attention again to FIGURE 2, the preferred embodiment of lamination apparatus 200 includes curing station receiving stack 207, wherein substrate material and interfaced lamination surface material is accumulated in a stack, such as may be formed through repeatedly depositing substrate material which is interfaced with lamination surface material one on top of another by the above mentioned automatic conveying mechanism. Accordingly, an amount of substrate material and interfaced lamination surface material may be accumulated over a period of time consistent with the cycling of a press, such as adhesive curing press 208, providing the above mentioned pressure over a desired amount of time with respect to a previously accumulated stack of substrate material and interfaced lamination surface material.

For example, a desired bond may be formed through the application of a particular pressure to the substrate material and laminate surface material interfaced unit over a selected period of time. In the preferred embodiment utilizing the above mentioned two component urethane adhesive, applying a pressure of approximately 20-35 psi, most preferably 30 psi over a time span of approximately 2 hours resulted in a bond suitable for use of the laminated product as a flooring material.

It shall be appreciated that accumulation of substrate material and interfaced lamination surface material prior to the desired application of pressure to provide the desired bond provides time in which the adhesive interfacing the mating surfaces may cure without the application of the desired pressure. However, as described above, the preferred embodiment of the present invention utilizes an adhesive having associated therewith a pot life, such as may be selected or adjusted by controlling the amount of a catalyst component of a multi-component adhesive or controlling the amount of additional catalyst introduced to the adhesive, sufficient for such staging of materials. Moreover, it should be appreciated that the preferred embodiment wherein the staged material is stacked, i.e., a first substrate material and laminate surface material unit are disposed on a staging table and thereafter each subsequent substrate material and laminate surface material unit are serially placed thereon, the material units first placed in the staging stack (the longest to be staged) benefit from pressure associated with the mass of additional material units stacked thereon. Of course, where such staging of interfaced material is not consistent with a desired bond or is otherwise not desired, a sufficient number of presses may be implemented to allow the application of pressure for a desired amount of time without staging or without significant staging times.

In order to present an acceptable trade off in a number of presses required to provide the desired amount of pressure over the desired amount of time, a preferred embodiment of the present invention utilizes a number of presses which when divided into the amount of time desired for pressure curing is consistent with an acceptable staging time. For example, in the above described preferred embodiment utilizing the application of pressure for 2 hours, if a staging time of 1 hour is acceptable for a particular adhesive utilized, 2 curing presses may be utilized.

Accordingly, in a preferred embodiment adhesive curing press 208 comprises a two station press. Here material is accumulated for one hour in a stack at curing station receiving stack 207 which is then accepted into a first stage of adhesive curing press 208 wherein a desired pressure is applied. Thereafter, material is again accumulated for one hour in a stack at curing station receiving stack 207. At the end of this hour, the material which was initially accepted into a first stage of adhesive curing press 208 is released from pressure and accepted into a second stage of adhesive curing press 208 wherein a desired pressure is again applied. Thereafter, the newly accumulated material is accepted into the first stage of adhesive curing press 208 wherein a desired pressure is applied. Thereafter, material is again accumulated for one hour in a stack at curing station receiving stack 207 and the above process repeated.

It shall be appreciated that the above described embodiment of adhesive curing press 208 provides for the simplified continuous production of laminated product as will typically be desired. However, the present invention is not limited to the use of a multiple stage press arrangement as described. For example, a number of stages in addition to the two described may be utilized according to the present invention. Alternatively, the present invention may alternate providing an accumulated stack as between the available number of presses, such as to avoid the releasing of pressure as a material stack is moved from one press stage to another, if desired.

Although described above as providing a consistent amount of pressure, the present invention may operate to provide varying amounts of pressure, such as at particular milestones in the curing of an adhesive. For example, a first, preferably lesser, pressure may be utilized in a first stage of adhesive curing press 208 in order to encourage the curing of the adhesive without displacing a substantial portion thereof, and a second, preferably greater, pressure may be utilized in a second stage of adhesive curing press 208 in order to encourage the substantially complete curing of the adhesive at a point at which the adhesive is sufficiently cured that its undesired migration due to added pressure is not substantially a concern. Of course, a multiple stage curing press arrangement is not required in order to provide the variable application of pressure of the present invention, as a press used throughout the curing of the adhesive may have its applied pressure adjusted during the process.

Curing press 208 may be adapted to provide heat or other conditions, such as an atmospheric pressure, air humidity, surrounding gas composition, or the like, conducive to the curing of the adhesive material. For example, curing press 208 may provide for a flow of heated air across a compressed stack of material to maintain the material at a desired temperature during curing. The application of such conditions may be intelligently controlled, such as by a processor-based system operating under control of an instruction set. For example, the aforementioned processor-based system may monitor a temperature of substrate material and adjust the temperature of the air flow to avoid excessive heating of the substrate material.

It shall be appreciated that, although described above with respect to applying a single layer upon a posterior and/or anterior surface, the present invention may be utilized to provide any number of lamination strata to a surface. For example, by introducing a laminated product resulting from the operation of lamination apparatus 200 into lamination apparatus 200 a second time, additional strati of lamination surface material may be added, such as where additional layers are required to provide a desired level of protection or a desired thickness of the resulting laminated product. Likewise, additional componentry, substantially as that shown in FIGURE 2, associated with the application of multiple layers of laminate surface material may be included within lamination apparatus 200, if desired.

Although the present invention and its advantages have been described in detail, it should be understood that various changes, substitutions and alterations can be made herein without departing from the spirit and scope of the invention as defined by the appended claims.

## Claims

1. A system for providing a unitary structure from a polymeric substrate material and a superstructure material, said system comprising:
means for treating a mating surface of said substrate material to increase the surface tension of the mating surface;
means for applying an adhesive to said treated mating surface of said substrate material, wherein application of said adhesive results in a substantially uniform coating of adhesive having a desired thickness over said treated mating surface of said substrate material;
means for interfacing a mating surface of said superstructure material with said coated mating surface of said substrate material;
means for homogenizing an interface between said mating surface of said superstructure and said coated mating surface of said substrate material, wherein said homogenizing means operates to remove gases trapped in said interface and to ensure substantially complete contact of said mating surface of said superstructure with the adhesive coating of said coated mating surface of said substrate material; and
means for compressing the interfaced superstructure and substrate with a selected pressure and for a controlled duration in order to cure said adhesive and provide an interface bond of a desired strength.

2. The system of claim 1, wherein said mating surface treating means comprises:
a corona treater disposed to deposit a corona onto a surface of the substrate.

3. The system of claim 1 or 2, wherein said thickness of said adhesive coating is selected from a range from approximately 3 to approximately 10 mils.

4. The system of any preceding claim, wherein said adhesive is a urethane adhesive and wherein said thickness of said adhesive coating is selected from a range from approximately 3 mils to approximately 5 mils.

5. The system of any of claims 1 to 4, wherein said adhesive is a water based adhesive and wherein said thickness of said adhesive coating is selected from a range from approximately 4 mils to approximately 6 mils.

6. The system of any preceding claim, wherein said adhesive applying means comprises a meter mix apparatus to mix components of a multiple component adhesive in a desired proportion.

7. The system of any preceding claim, wherein said adhesive applying means comprises:
means for introducing a catalyzing agent to said coating of adhesive applied to said treated mating surface of said substrate material.

8. The system of claim 7, wherein said catalyzing agent introducing means comprises:
a spray delivery apparatus operable to deliver a controlled amount of said catalyzing agent to said coating of adhesive applied to said treated mating surface of said substrate material.

9. The system of any preceding claim, wherein said adhesive applying means comprises a roller adhesive delivery apparatus, a spray delivery apparatus, or an adhesive bead delivery apparatus.

10. The system of claim 9, wherein said adhesive applying means comprises a spray adhesive delivery apparatus, which comprises:
a first set of spray orifices associated with a first component of said adhesive; and
a second set of spray orifices associated with a second component of said adhesive, wherein said first and second adhesive components are mixed by spray delivery.

11. The system of any preceding claim, wherein said adhesive is a one component or a two component urethane adhesive.

12. The system of any preceding claim, wherein said adhesive is a water based adhesive.

13. The system of claim 12, wherein said water based adhesive is selected from the group consisting of PVA; VAE; PVOH; and water based adhesives modified with aqueous based urethane dispersions.

14. The system of any preceding claim, wherein said interface homogenizing means comprises at least one roller disposed to rotatably engage a surface of one of said substrate material and said superstructure material.

15. The system of claim 14, wherein said at least one roller imparts a pressure of approximately 40 psi to said engaged surface.

16. The system of any preceding claim, further comprising:
staging means for accumulating interfaced superstructure and substrate material for bulk handling by said compressing means.

17. The system of claim 16, wherein said compressing means is a press adapted to accept accumulated ones of said interfaced superstructure and substrate material for application of controlled pressure thereto and to accept other accumulated ones of said interfaced superstructure and substrate material for application of a controlled pressure thereto, wherein a time of accumulating said interfaced superstructure and substrate material may be reduced by staggered acceptance of said accumulated ones and said other accumulated ones.

18. The system of any preceding claim, further comprising:
means for cleaning said mating surface of said substrate material prior to treating said mating surface by said treating means.

19. The system of any preceding claim, wherein said superstructure material is a high pressure or a low pressure decorative laminate.

20. The system of any preceding claim, wherein said superstructure material is a solid surface material, a sheet of metal, or a high pressure laminate backer.

21. A method for providing a unitary structure from a polymeric substrate material and a superstructure material, said method comprising the steps of:
cleaning a mating surface of said substrate material to provide a substantially particulate free mating surface;
treating said mating surface of said substrate material to increase the surface tension of the mating surface;
providing a substantially uniform adhesive layer of a desired thickness to said mating surface of said substrate material;
positioning a mating surface of said superstructure material in juxtaposition with said mating surface of said substrate material to establish an interface there between;
homogenizing said interface to provide a substantially uniform interface between said superstructure material and said substrate material; and
compressing said interface to encourage curing of said adhesive layer.

22. The method of claim 21, wherein said mating surface treating step comprises:
depositing a corona onto said mating surface of said substrate material.

23. The method of claim 21 or 22, wherein said adhesive layer providing step comprises the step of:
depositing a urethane adhesive to said mating surface in a uniform film of a thickness from approximately 3 mils to approximately 5 mils.

24. The method of claim 23, wherein said adhesive layer providing step further comprises the step of:
spraying a catalyst over said uniform film of said urethane adhesive.

25. The method of claim 23 or 24, wherein said urethane adhesive is a multiple component urethane adhesive, and wherein the adhesive layer providing step further comprises the step of:
mixing components of said multiple component urethane adhesive in controlled amounts selected to allow sufficient time for application of said urethane adhesive, positioning of said mating surfaces, and homogenizing of said interface without requiring compressive curing of said urethane adhesive for an undesired length of time in order to provide a desired bond.

26. The method of claim 25, wherein said undesired length of time for compressive curing of said urethane adhesive includes lengths of times substantially in excess of 2 hours.

27. The method of any of claims 21 to 26, further comprising the step of:
accumulating interfaced superstructure and substrate material for compressing in bulk at said compressing step.

28. The method of claim 27, wherein said compressing step comprises the steps of:
accepting accumulated ones of said interfaced superstructure and substrate material for application of controlled pressure thereto; and
accepting other accumulated ones of said interfaced superstructure and substrate material for application of controlled pressure thereto.

29. A system for producing a laminated product having a synthetic core material, said system comprising:
a corona treater disposed to receive a piece of said synthetic core material and impart a corona upon at least a first surface of said piece;
an adhesive applicator disposed to receive said piece of said synthetic core material and deposit a film of adhesive upon at least said first surface of said piece;
a laminate lay-up position disposed to receive said piece of said synthetic core material and a corresponding piece of a first laminate material and to mate a first surface of said piece of said first laminate material having no said adhesive film deposited thereon with said first surface of said piece of said synthetic core material having said adhesive film deposited thereon to thereby provide a combined unit having strata including said piece of said first laminate material, said adhesive film, and said piece of said synthetic core material;
a roller assembly disposed to engage said combined unit and to impart pressure substantially orthogonal to said strata;
a combined unit stacking position disposed to receive combined units having had pressure imparted thereon by said roller assembly and to accumulate said received combined units in a stack, wherein a combined unit having a piece of said synthetic core material first to receive said a piece of said first laminate material is disposed at a bottom of said stack with combined units having a piece of said synthetic core material later to receive a piece of said first laminate material are disposed more near a top of said stack; and
a press apparatus disposed to accept a first said stack of combined units and to apply a desired pressure thereto while said combined unit stacking position accumulates additional received combined units into a second stack.

30. The system of claim 29, further comprising:
a synthetic core material feeder assembly disposed to accept a plurality of synthetic core material pieces and to singulate said plurality for processing by said system.

31. The system of claim 29 or 30, further comprising:
a cleaner disposed to receive said piece of said synthetic core material and to clean at least said first surface of said piece.

32. The system of claim 31, wherein said cleaner comprises:
brushes to clean said at least one surface of said piece of said synthetic core material.

33. The system of claim 32, wherein said cleaner further comprises:
static electricity neutralizers to discourage the presence of a static electricity charge from at least said first surface of said piece of said synthetic core material.

34. The system of any of claims 29 to 33, wherein said adhesive deposited upon said first surface of said piece of said synthetic core material is a urethane adhesive

35. The system of claim 34, wherein said adhesive applicator comprises:
a water spray apparatus to introduce a controlled amount of water onto said film of adhesive.

36. The system of claim 35, wherein said controlled amount of water is selected from a range from approximately .2g/sqft to approximately .7g/sqft.

37. The system of claim 36, wherein said controlled amount of water is approximately .5 g/sqft.

38. The system of any of claims 29 to 37, wherein said roller assembly comprises:
means for providing a controlled amount of heat to an engaged said combined unit.

39. The system of claim 38, wherein said heat providing means is controlled to result in a temperature experienced by said piece of said synthetic core material of said combined unit not exceeding 70° C.

40. The system of any of claims 29 to 39, wherein said press apparatus comprises:
means for providing a controlled amount of heat to an accepted stack of said combined units.

41. The system of claim 40, wherein said heat providing means is controlled to result in a temperature experienced by said synthetic core material of said accepted stack not exceeding 70° C.

42. The system of any of claims 29 to 41, wherein said press apparatus accepts said second said stack of combined units during a time in which said first said stack of combined units is engaged in said press apparatus while said combined unit stacking position accumulates additional received combined units into a third stack.

43. The system of any of claims 29 to 42, wherein said corona treater is also disposed to impart a corona upon a second surface of said piece of said synthetic core material, said adhesive applicator is also disposed to deposit a film of adhesive upon said second surface of said piece of said synthetic core material, and said laminate lay-up position is also disposed to mate a first surface of a piece of a second laminate material having no said adhesive film deposited thereon with said second surface of said piece of said synthetic core material having said adhesive film deposited thereon to thereby provide said combined unit having strata including said piece of said first laminate material, a first adhesive film, said piece of said synthetic core material, a second adhesive film, and said piece of said second laminate material.

44. The system of claim 43, wherein said first surface of said piece of said synthetic core material and said second surface of said piece of said synthetic core material are opposite sides of said synthetic core material.

45. The system of claim 43 or 44, wherein said first laminate material is a decorative laminate and said second laminate material is a backer.

46. The system of claim 45, wherein said decorative laminate is a high pressure decorative laminate; a low pressure decorative laminate; a sheet of solid surface material; or a sheet of metallic material.

47. The system of claim 45 or 46, wherein said backer is a high pressure decorative laminate backer.
